# EUROPEAN PATENT SPECIFICATION

(11) **EP 3 527 471 B1**
(45) Date of publication and mention of the grant of the patent: **09.06.2021**
(21) Application number: 19151754.9
(22) Date of filing: 15.01.2019
(51) Int. Cl.: B62J 11/00, B62J 29/00

(54) **SET OF COMPONENTS FOR MAKING A BICYCLE MIRROR, BICYCLE MIRROR AND BICYCLE PROVIDED WITH SUCH A BICYCLE MIRROR**
KOMPONENTENSATZ ZUR HERSTELLUNG EINES FAHRRADSPIEGELS, FAHRRADSPIEGEL UND FAHRRAD MIT SOLCH EINEM FAHRRADSPIEGEL
ENSEMBLE DE COMPOSANTS POUR LA FABRICATION D'UN MIROIR DE BICYCLETTE, MIROIR DE BICYCLETTE ET BICYCLETTE COMPORTANT UN TEL MIROIR DE BICYCLETTE

(30) Priority: 19.02.2018 BE 201805102
(43) Date of publication of application: 21.08.2019
(73) Proprietor: Osmana, 2460 Kasterlee (BE)
(72) Inventor: Oeyen, Jan, 2460 Kasterlee (BE)
(74) Representative: Kamphuis, Albertus Johannes

(56) References cited:
- EP-A1- 1 399 356
- CN-U- 201 573 738
- CN-U- 205 059 828
- CN-U- 205 396 328
- CN-Y- 2 459 253
- FR-A1- 2 945 784
- JP-U- S5 357 465
- JP-U- S5 471 861
- JP-U- S5 863 178
- TW-U- M 353 862
- US-A- 4 054 375

## Description

The present invention relates to a set of components for making a bicycle mirror, that is to say, a mirror intended to be attached to a bicycle, a bicycle mirror, and a bicycle powered by muscular strength, electrically or otherwise, which is provided with such a bicycle mirror.

Bicycle mirrors are known in many variants, such as described, for example, in WO 2014056051, DE 4324501, US 3981567, US 2007091480, GB 2376931, US 4326774, US 3995945 and EP 1399356.

However, these bicycle mirrors present the disadvantage that they are rather difficult to mount and therefore cannot be easily and flexibly used at different locations on a bicycle.

They also have many components, such that they have a complex construction and/or are hard to mount. An example thereof is disclosed in CN 201573738. CN 201 573 738 U discloses the features of the preamble of claim 1.

Also, known bicycle mirrors have no or limited positioning options with respect to their orientation, or they are relatively large and vulnerable to damages.

The objective of the invention is to offer a solution to these and other disadvantages and concerns to this end a set of components for making a bicycle mirror, wherein the set of components comprises the features of claim 1.

Alternatively, the invention concerns a bicycle mirror according to claim 13.

For the sake of completeness, it is noted that the closing means are such, that a first point on the fastening strap can be connected to a second point on the fastening strap such that at least a part of the fastening strap can form a loop which is closed by the closing means and which can sufficiently tightly be fitted around the respective rod. The closing means can preferably be reopened and are preferably reusable.

Such a bicycle mirror has the advantage that it can easily be attached to a bicycle at various locations, depending on the needs of the user, without specialist knowledge or tools.

Additionally, due to the connecting rod, the mirror body can be placed at some distance from the bicycle, in order to limit the extent the body of the cyclist may block the field of vision obtained through the bicycle mirror.

Also, due to the presence of the connecting rod, the mirror body is not, or much less, blocked in its positioning options, than in the case of a direct mount onto the fastening strap, because in the latter case, parts of the bicycle, or of the fastening strap, could block a movement of the mirror body.

The following preferred embodiments and variants relate to the set of components as defined in claim 1 and incorporate all features as specified in claim 1, and alternatively relate to the bicycle mirror as defined in claim 13 and incorporate all features as specified in claim 13

Preferably, the connecting rod has a length of up to 30 cm. Preferably, the connecting rod has a length of at least 5 cm.

Preferably, the fastening strap with the first coupling member consists of one component.

Preferably, the mirror body with the second coupling member consists of one component.

Preferably, the connecting rod with the third coupling member and the fourth coupling member consists of a maximum of two components.

As a result, a very simply constructed bicycle mirror is obtained with only three or four components that can be easily assembled without additional connecting means.

In preferred embodiments of the set of components of claim 1, respectively the bicycle mirror of claim 13, the first coupling member is inseparably attached to the fastening strap, or the first coupling member and the fastening strap are made as one piece.

Preferably, the fastening strap is made of plastic, more preferably of elastic plastic, and even more preferably of styrene-block copolymer based TPE.

Preferably, the fastening strap consists of one piece.

Preferably, the fastening strap has an extension at a force of 10 N of more than 0.5% of its length and less than 20% of its length, and preferably of more than 1% of its length, such that the desired tightness of attachment is obtained.

In a preferred embodiment, the connecting rod is at least partly made of an elastically deformable plastic. This reduces the risk of rupture or other damage in the event the bicycle mirror bumps into something. In addition, this reduces vibrations of the mirror body.

In a further preferred embodiment, the connecting rod comprises two parts which are attached or are attachable to each other, i.e. a first part comprising or forming the third coupling member and a second part comprising or forming the fourth coupling member, whereby only the second part is made of an elastic plastic, such that the connecting rod has sufficient stiffness, whereby, in an attached state, the first part and the second part of the connecting rod have a fixed position relative to each other.

As a result, both parts can be embodied independently of each other in a material which is optimal for their respective functions, for instance the first part can be embodied in an inexpensive and sufficiently rigid plastic, which allows the third coupling member to be fitted around the second coupling member and the second can be embodied in a softer, more elastic, and more rough plastic that allows the second coupling member to sufficiently clamp to it and to have sufficient friction to maintain a set position of the mirror body.

In a preferred embodiment, the connecting rod is provided with a curvature or bend. This further increases the positioning options of the orientation of the reflective surface. This also allows the reflective surface to be placed further away from the center of the bicycle, in order to limit the extent the body of the cyclist may block the field of vision. The curvature or bend is preferably at least 5 degrees. The curvature or bend is preferably a maximum of 45 degrees.

In a preferred embodiment, the reflective surface is a convex surface, the reflective surface being convex in two directions perpendicular to each other with a radius of curvature of between 130 and 190 mm, and preferably between 145 and 175 mm. As a result, the field of view obtained through the reflective surface is widened. The said radius of curvature ensures that the correct degree of magnification of the field of vision is obtained, that is to say, sufficient to be useful in practice but not too much not to show things that are not useful for road safety.

Preferably, the convex surface is formed by a component having a convex side and a concave side, the second coupling member being arranged on the concave side, such that the second coupling member does not interfere with the reflective surface.

In this case, preferably the said component with a convex side and a concave side and the second coupling member are made as one piece and are made of plastic. This results in a simple construction with only one component, which, moreover, weighs little.

In the claimed embodiment, the fourth coupling member comprises one or more cylindrical parts on which, in the state the second coupling member and the fourth coupling member are coupled to each other, the second coupling member engages and around which, in the state the second coupling member and the fourth coupling member are coupled to each other, the second coupling member can move. Preferably, the second coupling member comprises one or more claws which are adapted to be snapped around the said one or more cylindrical parts of the fourth coupling member.

In the claimed embodiment, the third coupling member is adapted to be fittingly applied around the first coupling member in order to thereby interconnect the fastening strap and the connecting rod, wherein the second coupling member and the fourth coupling member are adapted to be coupled to each other through a snap connection in order to thereby interconnect the connecting rod and the mirror body.

In a preferred embodiment, the first coupling member comprises a rod-shaped part around which the third coupling member can be applied, wherein the third coupling member comprises a slot-shaped part having a shape complementary to the rod-shaped part of the first coupling member, wherein the third coupling member also has a sleeve-shaped part which connects to the slot-shaped part, wherein the sleeve-shaped part has an internal cavity with a shape complementary to the rod-shaped part of the first coupling member.

In yet another preferred embodiment, the first coupling member comprises a rod-shaped part around which the third coupling member can be applied, wherein the rod-shaped part is made of elastically deformable plastic, wherein the rod-shaped part can be inserted into the third coupling member in a deformed state and can be taken out again in such a deformed state, wherein the rod-shaped part in a non-deformed state cannot be inserted into or taken out of the third coupling member. Hereby, preferably the rod-shaped part of the first coupling member is cylindrically shaped, wherein in the case where the second coupling member and the first coupling member are coupled to each other, the second coupling member engages the rod-shaped part and can move around the second coupling member.

This results in a coupling that can easily be made without tools or other means and that is still reliable.

In a preferred embodiment, the first coupling member and the second coupling member are adapted to be reversibly coupled to each other through a snap connection in order to thereby directly interconnect the fastening strap and the mirror body.

As a result, the bicycle mirror can also be used without a connecting rod. In such a case there are fewer positioning options for the mirror body, but the total dimension is smaller.

In preferred embodiments of the set of components of claim 1, respectively the bicycle mirror of claim 13, the first coupling member and the third coupling member are free of metal parts. Preferably, in addition the second coupling member and the fourth coupling member are free of metal parts.

In a preferred embodiment, the third coupling member comprises a slot-shaped part having a shape which is complementary to the rod-shaped part of the first coupling member, wherein the third coupling member also comprises a sleeve-shaped part, wherein the sleeve-shaped part has an internal cavity with a shape complementary to the rod-shaped part of the first coupling member. Preferably, the slot-shaped part connects to the sleeve-shaped part.

This is a practical embodiment of the coupling which is formed by the first coupling member and the third coupling member, wherein the coupling can be performed without tools and without training.

In preferred embodiments of the set of components of claim 1, respectively the bicycle mirror of claim 13, an enclosing geometrical bar of the fastening strap and an enclosing geometrical bar of the connecting rod and an enclosing geometrical bar of the mirror body each have a smallest dimension which is smaller than 30 mm, and preferably smaller than 25 mm.

For the sake of clarity, an enclosing geometrical bar means the smallest possible polygon with six rectangular side surfaces in which the respective component of the bicycle mirror fits.

This allows the set of components to be packaged as a flat package such that it fits into a standard mailbox.

Preferably, said geometrical bars have a largest dimension which is smaller than 320 mm such that the fastening strap, the connecting rod and the mirror body fit into a standard C4-format envelope. Preferably, said geometrical bars have a largest dimension which is smaller than 220 mm such that said components fit into a standard C5-format envelope.

In a preferred embodiment of the set of components, the set of components comprises all components necessary for manufacturing a bicycle mirror, wherein the set of components consists of a said fastening strap, a said mirror body and a said connecting rod, wherein the fastening strap with the first coupling member is made as one piece or consists of inseparably interconnected components and the mirror body with the second coupling member is made as one piece or consists of inseparably interconnected components.

The invention further relates to a bicycle mirror comprising a set of components according to the invention, wherein the fastening strap and the connecting rod and the mirror body are interconnected by means of their respective coupling members without using one or more screws, bolts or pins.

The invention further relates to a bicycle which comprises one or more rods and which is provided with a bicycle mirror according to the invention wherein the fastening strap and the extension rod and the mirror body are interconnected by means of their respective coupling members and wherein the fastening strap is applied around a said rod.

In order to clarify the invention, a preferred embodiment is described below, with reference to the following figures, wherein
figure 1 shows a perspective view of a bicycle mirror according to the invention;
figure 2 shows a top view according to F2 of the bicycle mirror of figure 1
figure 3 shows in perspective view from a different angle the bicycle mirror of figures 1 and 2;
figure 4 shows in perspective view a part of the bicycle mirror of figures 1 to 3;

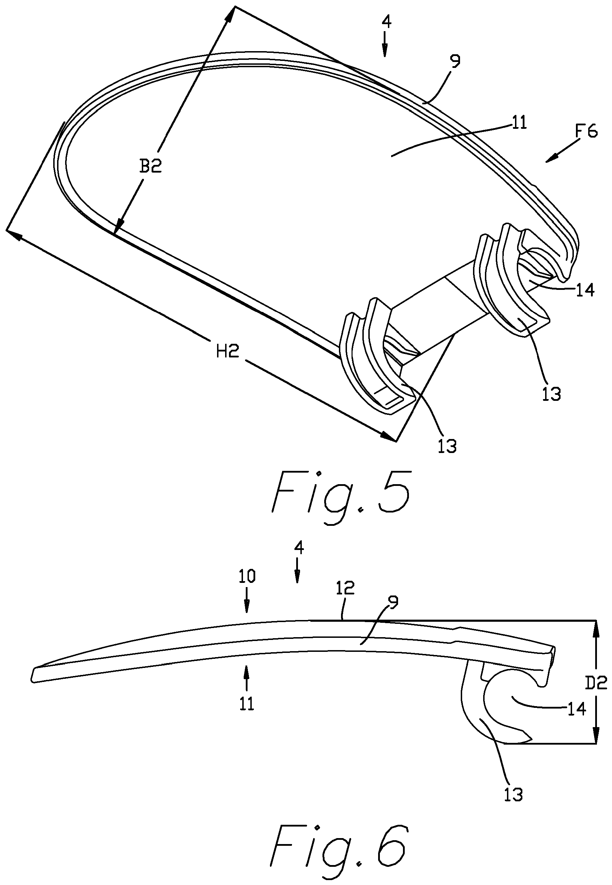

figure 5 shows in perspective view another component of the bicycle mirror of figures 1 to 3;
figure 6 shows the component of figure 5 in side view according to F6;
figure 7 shows a perspective view of another component of the bicycle mirror of figures 1 to 3, divided into two parts; and
figure 8 shows in perspective view a use of the bicycle mirror of figures 1 to 3.

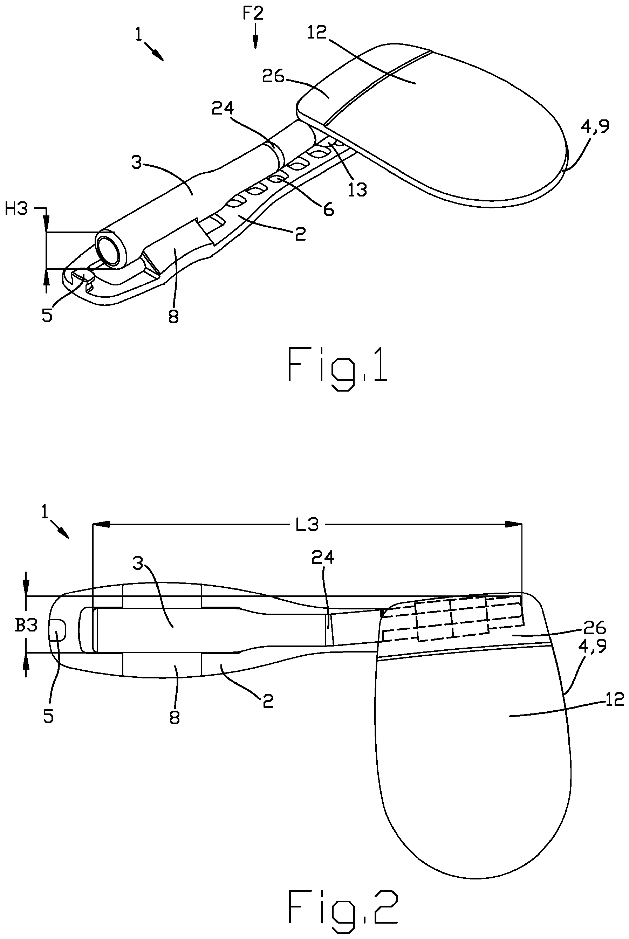

The bicycle mirror 1 shown in Figures 1 to 3 consists of three main components, namely a fastening strap 2, a mirror body 4 and a connecting rod 3. These main components are provided with coupling members as described below in detail and are reversibly interconnected by means of these coupling members such that they can repeatedly be separated from each other and can be interconnected again.

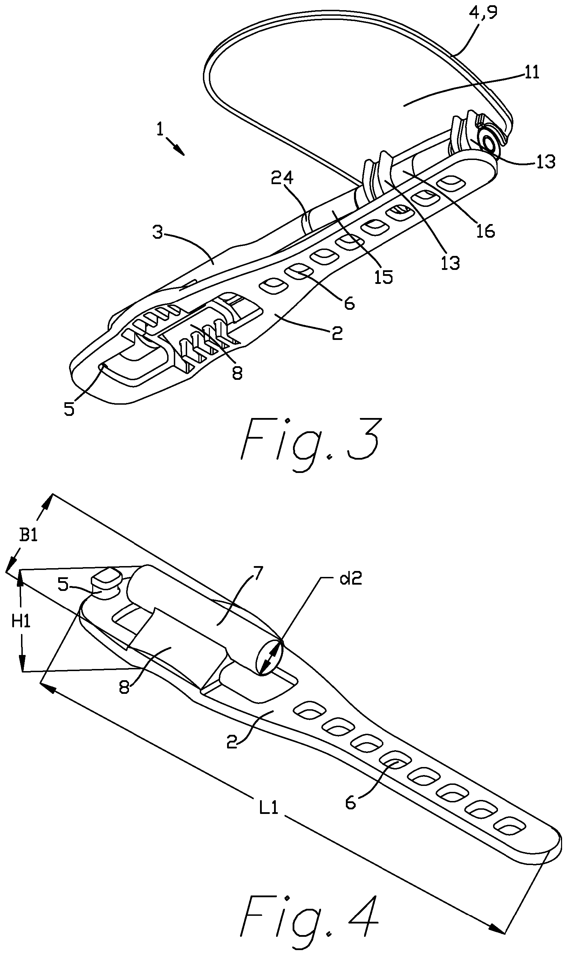

The fastening strap 2 is shown in more detail in figure 4. The fastening strap 2 is made as one piece and is made of TPE, more specifically of Thermoplas K from the company Kariburg.

The fastening strap 2 has a length L1 of 159 mm, a width B1 of 31 mm and a height H1 of 17 mm. The fastening strap 2 is provided at one end with a protruding pawl 5 and, is provided, starting from the other end, with eight holes 6 arranged at regular intervals along approximately half of its length L1.

The pawl 5 and the holes 6 jointly form closing means for the fastening strap 2, which allow the fastening strap 2 to be tightly secured in the shape of a loop around a component of a bicycle, wherein the component may have a large variety of dimensions due to the presence of eight holes 6.

The fastening strap 2 is further provided with a first coupling member 7, which is embodied as a rod-shaped part which is connected to the rest of the fastening strap 2 through a base 8.

The mirror body 4 is made of Galvano ABS and mainly consists of a curved surface 9 having a convex side 10 and a concave side 11. The surface 12 on the convex side 10 is made reflective. On the concave side 11 two claws 13 have been arranged, which jointly form a second coupling member.

The convex surface 12 has the shape of a surface part of a sphere with a radius of 160 mm.

The diameter d1 of the first coupling member 7 is slightly larger than the space 14 defined by the claws 13, such that the claws 13 can be snapped around the first coupling member 7 and in that state slightly clamp the first coupling member 7, such that the mirror body 4 is rotatable with some resistance around the first coupling member 7.

The mirror body 4 has a height H2 of 92 mm, a width B2 of 63 mm and a thickness D2 of 22.5 mm.

In addition to the reflective surface 12, a non-reflective part 26 is provided on the convex side. This can, for example, be used to apply text or a logo, for example from the seller of the bicycle mirror 1 or from a sponsor.

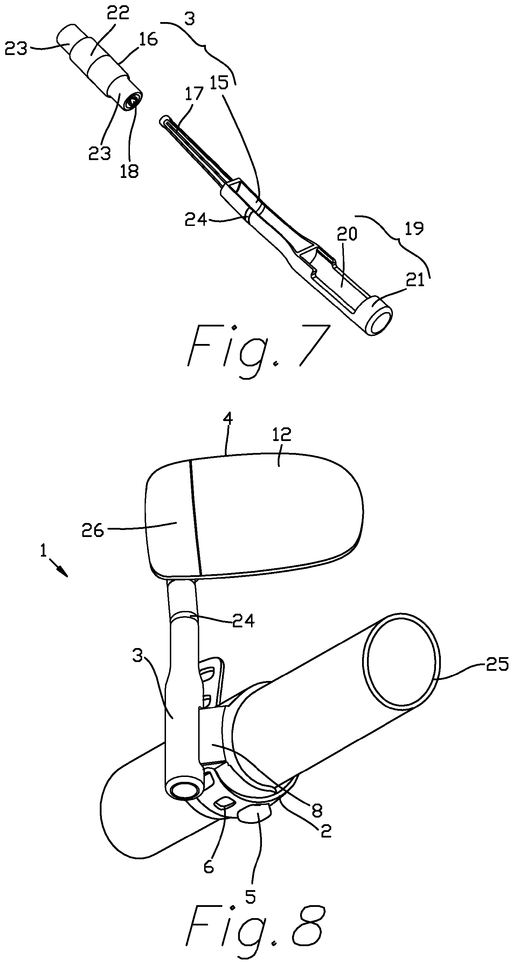

The connecting rod 3 is shown in detail in figure 7. The connecting rod 3 consists of two parts, namely a first part 15 which is made of ABS and a second part 16 which is made of the same TPE as the fastening strap 2.

Both parts 15, 16 are attached to each other in such a way that they cannot easily be removed manually from each other. This is done by mechanically pressing a projection 17 on the first part 15 into a corresponding hole 18 in the second part 16. Here, the hole 18 has a slightly smaller dimension than the projection 17, such that the projection clamps in the hole 18. For the sake of clarity, it is noted that in figure 7 the two parts 15, 16 are not yet attached to each other, and in figures 1 to 3 and 8 are attached to each other.

Alternatively, the dimensions of the projection 17 and the hole 18 are such that both parts 15, 16 can manually be attached to each other and removed again from each other.

The first part 15 of the connecting rod 3 is provided with a third coupling member 19. This third coupling member 19 is formed by a combination of a slot-shaped part 20 with a partly circular cross-section and a sleeve-shaped part 21 with a cylindrical internal cavity, both having dimensions which are complementary to the first coupling member 7.

The second part 16 of the connecting rod 3 forms in its entirety a fourth coupling member. It consists of a central first cylindrical part 22 with a larger diameter than the first coupling member 7, with at both ends a second cylindrical part 23 with a diameter d1 which is equal to the diameter of the first coupling member 7, such that the claws 13 of the mirror body 4 can be snapped around the second cylindrical parts 23 and in that state slightly clamp the second cylindrical parts 23, such that the mirror body 4 is rotatable with some resistance around the fourth coupling member 16.

The connecting rod 3 is provided with a bend 24 of approximately 10°.

The connecting rod 3 has a length L3 of 139 mm, a width B3 of 14.8 mm and a height H3 of 14.3 mm.

The use of the bicycle mirror 1 is as follows.

First, the fastening strap 2 is attached to a component of a bicycle by means of the closing means 5, 6, in such a manner that the fastening strap 2 is tightly fixed around this component. In figure 8 by way of example this is a rod 25 of a bicycle.

Subsequently, the connecting rod 3 is connected to the fastening strap 2 by sliding the sleeve-shaped part 21 of the third coupling member 19 over one end of the first coupling member 7, and subsequently the slot-shaped part 20 of the third coupling member 19 tightly over the remainder of the first coupling member 7, until the third coupling member 19 is located fittingly around the first coupling member 7. Due to the elasticity of the fastening strap 2, this can easily be carried out.

Next, the claws 13 of the mirror body 4 are snapped around the second part 16 of the connecting rod 3, in other words, around the fourth coupling member 16.

The mirror body 4 is now rotatable with some resistance around the end of the connecting rod 3 and can therefore be positioned in the orientation desired by the user. Also, the orientation of the fastening strap 2 around the rod 25 can be adjusted. This is done by rotating the fastening strap 2 around the rod 25, depending on the circumstances with or without temporarily detaching the closing means 5,6.

Due to their dimensions, the three main components 3,4,5 can be applied together on a flat carrier, for example a piece of cardboard, without the total thickness exceeding 3 cm, such that they can be easily inserted into a C5 envelope together with the flat carrier and pushed through a standard mailbox. Here, optionally, the connecting rod 3 can also be divided into its two parts 15,16. As a result, the bicycle mirror 1 can easily be delivered by mail.

## Claims

1. Set of components for making a bicycle mirror (1), wherein the set of components comprises a fastening strap (2), comprises a mirror body (4) and comprises a connecting rod (3), wherein the fastening strap (2) is provided with a first coupling member (7), wherein the fastening strap (2) is provided with closing means (5, 6) for attaching the fastening strap (2) around a rod or other part of a bicycle, wherein the mirror body (4) comprises a reflective surface (12), wherein the mirror body (4) is provided with a second coupling member (13), wherein the connecting rod (3) is provided at a first end with a third coupling member (19) and is provided at a second end with a fourth coupling member (16), wherein the third coupling member (19) and the first coupling member (7) are adapted to jointly form a coupling for interconnecting the fastening strap (2) and the connecting rod (3), and wherein the second coupling member (13) and the fourth coupling member (16) are adapted to jointly form a coupling for interconnecting the connecting rod (3) and the mirror body (4), wherein the third coupling member (19) is adapted to be fittingly applied around the first coupling member (7) for interconnecting the fastening strap (2) and the connecting rod (3), wherein the second coupling member (13) and the fourth coupling member (16) are adapted to be coupled to each other through a snap connection in order to thereby interconnect the connecting rod (3) and the mirror body (4), **characterized in that** the fourth coupling member (16) comprises one or more cylindrical parts (23), wherein the second coupling member (13) comprises one or more claws (13) adapted to snap around the said one or more cylindrical parts (23) of the fourth coupling member (16), such that, in the state the one or more claws (13) are snapped around the said one or more cylindrical parts (23) of the fourth coupling member (16), the second coupling member (13) can move around the fourth coupling member (16).

2. Set of components according to claim 1, **characterized in that** the fastening strap (2) is made of an elastic plastic, wherein the first coupling member (7) is permanently attached to the fastening strap (2) or the first coupling member (7) and the fastening strap (2) are made as one piece.

3. Set of components according to any one of the preceding claims, **characterized in that** the connecting rod (3) comprises at least two parts which are attachable to each other, namely a first part (15) which comprises or forms the third coupling member (19) and a second part I (16) which comprises or forms the fourth coupling member (16), wherein only the second part (16) is made of an elastic plastic and wherein the first part (15) and the second part (16), in an attached state, have a fixed position relative to each other.

4. Set of components according to any one of the preceding claims, **characterized in that** the connecting rod (3) is provided with a curvature or bend (24).

5. Set of components according to any one of the preceding claims, **characterized in that** the reflective surface (12) is a convex surface, wherein the reflective surface (12) is convex in two directions perpendicular to each other with a radius of curvature of between 130 and 190 mm.

6. Set of components according to any one of the preceding claims, **characterized in that** the reflective surface (12) is a convex surface, wherein the convex surface (12) is formed by a component (9) having a convex side (10) and a concave (11) side, wherein the second coupling member (13) is applied onto the concave side (11).

7. Set of components according to claim 5 or 6, **characterized in that** said component (9) having a convex side (10) and a concave (11) side and the second coupling member (13) are made as one piece and are made of plastic.

8. Set of components according to any one of the preceding claims, **characterized in that** the first coupling member (7) comprises a rod-shaped part (7) around which the third coupling member (19) can be applied, wherein the third coupling member (19) comprises a slot-shaped part (20) with a shape complementary to the rod-shaped part (7) of the first coupling member (7), wherein the third coupling member (19) also comprises a sleeve-shaped part (21) which connects to the slot-shaped part (20), wherein the sleeve-shaped part (21) has an internal cavity with a shape complementary to the rod-shaped part (7) of the first coupling member (7).

9. Set of components according to claim 8, **characterized in that** the first coupling member (7) comprises a rod-shaped part (7) around which the third coupling member (19) can be arranged, wherein the rod-shaped part (7) is made of elastically deformable plastic, wherein the rod-shaped part (7) can be inserted into the third coupling member (19) in a deformed state and can be taken out again, wherein the rod-shaped part (7) in a non-deformed state cannot be inserted into the third coupling member (19) or cannot be taken out again.

10. Set of components according to any one of the preceding claims, **characterized in that** the first coupling member (7) and the second coupling member (13) are adapted to be reversibly coupled to each other through a snap connection in order to thereby directly interconnect the fastening strap (2) and the mirror body (4).

11. Set of components according to any one of the preceding claims, **characterized in that** an enclosing geometrical bar of the fastening strap (2) and an enclosing geometrical bar of the connecting rod (3) and an enclosing geometrical bar of the mirror body (4) each have a smallest dimension which is smaller than 30 mm.

12. Set of components according to any one of the preceding claims, **characterized in that** the set of components contains all components (2,3,4) necessary to manufacture a bicycle mirror (1), wherein the set of components consists of a said fastening strap (2), a said mirror body (4) and a said connecting rod (3), wherein the said fastening strap (2) is made as one piece or consists of inseparably interconnected components and the said mirror body (4) is made as one piece or consists of inseparably interconnected components.

13. Bicycle mirror (1) comprising a set of components (2,3,4) according to any one of the preceding claims.

## Patentansprüche

1. Komponentensatz zum Herstellen eines Fahrradspiegels (1), wobei der Komponentensatz einen Befestigungsriemen (2), einen Spiegelkörper (4) und eine Verbindungsstange (3) umfasst, wobei der Befestigungsriemen (2) mit einem ersten Kopplungselement (7) versehen ist, wobei der Befestigungsriemen (2) mit Schließmitteln (5, 6) zum Befestigen des Befestigungsriemens (2) um eine Stange oder einen anderen Teil eines Fahrrads versehen ist, wobei der Spiegelkörper (4) eine reflektierende Oberfläche (12) umfasst, wobei der Spiegelkörper (4) mit einem zweiten Kopplungselement (13) versehen ist, wobei die Verbindungsstange (3) an einem ersten Ende mit einem dritten Kopplungselement (19) versehen ist und an einem zweiten Ende mit einem vierten Kopplungselement (16) versehen ist, wobei das dritte Kupplungselement (19) und das erste Kupplungselement (7) so angepasst sind, dass sie gemeinsam eine Kupplung zum Verbinden des Befestigungsriemens (2) und der Verbindungsstange (3) bilden, und wobei das zweite Kupplungselement (13) und das vierte Kupplungselement (16) so angepasst sind, dass sie gemeinsam eine Kupplung zum Verbinden der Verbindungsstange (3) und des Spiegelkörpers (4) bilden, wobei das dritte Kopplungselement (19) so angepasst ist, um passend um das erste Kopplungselement (7) angebracht zu werden, um den Befestigungsriemen (2) und die Verbindungsstange (3) miteinander zu verbinden, wobei das zweite Kopplungselement (13) und das vierte Kopplungselement (16) so angepasst sind, um miteinander durch eine Schnappverbindung gekoppelt zu werden, um dadurch die Verbindungsstange (3) und den Spiegelkörper (4) miteinander zu verbinden, **dadurch gekennzeichnet, dass** das vierte Kupplungselement (16) einen oder mehrere zylindrische Teile (23) umfasst, wobei das zweite Kupplungselement (13) eine oder mehrere Klauen (13) umfasst, die so angepasst sind, dass sie um den einen oder die mehreren zylindrischen Teile (23) des vierten Kupplungselements (16) einschnappen, so dass sich das zweite Kupplungselement (13) in dem Zustand, in dem die eine oder die mehreren Klauen (13) um den einen oder die mehreren zylindrischen Teile (23) des vierten Kupplungselements (16) eingeschnappt sind, um das vierte Kupplungselement (16) bewegen kann.

2. Komponentensatz nach Anspruch 1, **dadurch gekennzeichnet, dass** der Befestigungsriemen (2) aus einem elastischen Kunststoff besteht, wobei das erste Kupplungselement (7) fest mit dem Befestigungsriemen (2) verbunden ist oder das erste Kupplungselement (7) und der Befestigungsriemen (2) einstückig ausgeführt sind.

3. Komponentensatz nach einem der vorhergehenden Ansprüche, **dadurch gekennzeichnet, dass** die Verbindungsstange (3) mindestens zwei aneinander befestigbare Teile umfasst, nämlich einen ersten Teil (15), der das dritte Kupplungselement (19) umfasst oder bildet, und einen zweiten Teil (16), der das vierte Kupplungselement (16V) umfasst oder bildet, wobei nur der zweite Teil (16) aus einem elastischen Kunststoff besteht und wobei der erste Teil (15) und der zweite Teil (16) in einem befestigten Zustand eine feste Position zueinander aufweisen.

4. Komponentensatz nach einem der vorhergehenden Ansprüche, **dadurch gekennzeichnet, dass** die Verbindungsstange (3) mit einer Krümmung oder Biegung (24) versehen ist.

5. Komponentensatz nach einem der vorhergehenden Ansprüche, **dadurch gekennzeichnet, dass** die reflektierende Oberfläche (12) eine konvexe Fläche ist, wobei die reflektierende Oberfläche (12) in zwei zueinander senkrechten Richtungen mit einem Krümmungsradius zwischen 130 und 190 mm konvex ist.

6. Komponentensatz nach einem der vorhergehenden Ansprüche, **dadurch gekennzeichnet, dass** die reflektierende Oberfläche (12) eine konvexe Fläche ist, wobei die konvexe Oberfläche (12) durch eine Komponente (9) mit einer konvexen Seite (10) und einer konkaven (11) Seite gebildet wird, wobei das zweite Kupplungselement (13) auf der konkaven Seite (11) aufgebracht ist.

7. Komponentensatz nach Anspruch 5 oder 6, **dadurch gekennzeichnet, dass** die Komponente (9) mit einer konvexen Seite (10) und einer konkaven Seite (11) und das zweite Kupplungselement (13) einstückig hergestellt sind und aus Kunststoff bestehen.

8. Komponentensatz nach einem der vorhergehenden Ansprüche, **dadurch gekennzeichnet, dass** das erste Kupplungselement (7) einen stabförmigen Teil (7) umfasst, um den das dritte Kupplungselement (19) angebracht werden kann, wobei das dritte Kupplungselement (19) einen schlitzförmigen Teil (20) mit einer Form umfasst, die komplementär zu dem stabförmigen Teil (7) des ersten Kupplungselements (7) ist, wobei das dritte Kupplungselement (19) auch ein hülsenförmiges Teil (21) umfasst, das mit dem schlitzförmigen Teil (20) verbunden ist, wobei das hülsenförmige Teil (21) einen inneren Hohlraum mit einer Form aufweist, die komplementär zu dem stabförmigen Teil (7) des ersten Kupplungselements (7) ist.

9. Komponentensatz nach Anspruch 8, **dadurch gekennzeichnet, dass** das erste Kupplungselement (7) ein stabförmiges Teil (7) umfasst, um das das dritte Kupplungselement (19) anbringbar ist, wobei das stabförmige Teil (7) aus elastisch verformbarem Kunststoff besteht, wobei das stabförmige Teil (7) in verformtem Zustand in das dritte Kupplungselement (19) einführbar und wieder herausnehmbar ist, wobei das stabförmige Teil (7) in unverformtem Zustand nicht in das dritte Kupplungselement (19) einführbar oder wieder herausnehmbar ist.

10. Komponentensatz nach einem der vorhergehenden Ansprüche, **dadurch gekennzeichnet, dass** das erste Kopplungselement (7) und das zweite Kopplungselement (13) so angepasst sind, um durch eine Schnappverbindung reversibel miteinander gekoppelt zu werden, um dadurch den Befestigungsriemen (2) und den Spiegelkörper (4) direkt miteinander zu verbinden.

11. Komponentensatz nach einem der vorhergehenden Ansprüche, **dadurch gekennzeichnet, dass** ein umschließender geometrischer Steg des Befestigungsriemens (2) und ein umschließender geometrischer Steg der Verbindungsstange (3) und ein umschließender geometrischer Steg des Spiegelkörpers (4) jeweils eine kleinste Abmessung aufweisen, die kleiner als 30 mm ist.

12. Komponentensatz nach einem der vorhergehenden Ansprüche, **dadurch gekennzeichnet, dass** der Komponentensatz alle zum Herstellen eines Fahrradspiegels MV erforderlichen Komponenten (2, 3, 4) enthält, wobei der Komponentensatz aus dem Befestigungsriemen (2), dem Spiegelkörper (4) und der Verbindungsstange (3) besteht, wobei der Befestigungsriemen (2) einteilig ausgeführt ist oder aus untrennbar miteinander verbundenen Komponenten besteht und der Spiegelkörper (4) einteilig ausgeführt ist oder aus untrennbar miteinander verbundenen Komponenten besteht.

13. Fahrradspiegel (1), umfassend einen Komponentensatz (2, 3, 4) nach einem der vorhergehenden Ansprüche.

## Revendications

1. Ensemble de composants pour réaliser un miroir de bicyclette (1), où l'ensemble de composants comprend une sangle de fixation (2), comprend un corps de miroir (4) et comprend une bielle (3), où la sangle de fixation (2) est dotée d'un premier élément d'accouplement (7), où la sangle de fixation (2) est dotée de moyens de fermeture (5, 6) pour attacher la sangle de fixation (2) autour d'une tige ou d'une autre partie d'une bicyclette, où le corps de miroir (4) comprend une surface réfléchissante (12), où le corps de miroir (4) est doté d'un deuxième élément d'accouplement (13), où la bielle (3) est dotée à une première extrémité d'un troisième élément d'accouplement (19) et est dotée à une deuxième extrémité d'un quatrième élément d'accouplement (16), où le troisième élément d'accouplement (19) et le premier élément d'accouplement (7) sont adaptés pour former conjointement un accouplement pour interconnecter la sangle de fixation (2) et la bielle (3), et où le deuxième élément d'accouplement (13) et le quatrième élément d'accouplement (16) sont adaptés pour former conjointement un accouplement pour interconnecter la bielle (3) et le corps de miroir (4), où le troisième élément d'accouplement (19) est adapté pour être appliqué de manière ajustée autour du premier élément d'accouplement (7) pour interconnecter la sangle de fixation (2) et la bielle (3), où le deuxième élément d'accouplement (13) et le quatrième élément d'accouplement (16) sont adaptés pour être couplés l'un à l'autre par une connexion par encliquetage afin d'interconnecter ainsi la bielle (3) et le corps de miroir (4),
**caractérisé en ce que** le quatrième élément d'accouplement (16) comprend une ou plusieurs parties cylindriques (23), où le deuxième élément d'accouplement (13) comprend une ou plusieurs griffes (13) adaptées pour s'encliqueter autour desdites une ou plusieurs parties cylindriques (23) du quatrième élément d'accouplement (16), de sorte que, dans l'état où la ou les griffes (13) sont encliquetées autour de ladite ou desdites parties cylindriques (23) du quatrième élément d'accouplement (16), le deuxième élément d'accouplement (13) peut se déplacer autour du quatrième élément d'accouplement (16).

2. Ensemble de composants selon la revendication 1, **caractérisé en ce que** la sangle de fixation (2) est faite d'un plastique élastique, où le premier élément d'accouplement (7) est attaché de manière permanente à la sangle de fixation (2) ou le premier élément d'accouplement (7) et la sangle de fixation (2) sont faits en une seule pièce.

3. Ensemble de composants selon l'une quelconque des revendications précédentes, **caractérisé en ce que** la bielle (3) comprend au moins deux parties qui peuvent être attachées l'une à l'autre, à savoir une première partie (15) qui comprend ou forme le troisième élément d'accouplement (19) et une deuxième partie (16) qui comprend ou forme le quatrième élément d'accouplement (16), où seule la deuxième partie (16) est faite d'un plastique élastique et où la première partie (15) et la deuxième partie (16), dans un état attaché, ont une position fixe l'une par rapport à l'autre.

4. Ensemble de composants selon l'une quelconque des revendications précédentes, **caractérisé en ce que** la bielle (3) est dotée d'une courbure ou d'un coude (24).

5. Ensemble de composants selon l'une quelconque des revendications précédentes, **caractérisé en ce que** la surface réfléchissante (12) est une surface convexe, où la surface réfléchissante (12) est convexe dans deux directions perpendiculaires l'une à l'autre avec un rayon de courbure compris entre 130 et 190 mm.

6. Ensemble de composants selon l'une quelconque des revendications précédentes, **caractérisé en ce que** la surface réfléchissante (12) est une surface convexe, où la surface convexe (12) est formée par un composant (9) ayant un côté convexe (10) et un côté concave (11), où le deuxième élément d'accouplement (13) est appliqué sur le côté concave (11).

7. Ensemble de composants selon la revendication 5 ou 6, **caractérisé en ce que** ledit composant (9) ayant un côté convexe (10) et un côté concave (11) et le deuxième élément d'accouplement (13) sont faits en une seule pièce et sont faits de plastique.

8. Ensemble de composants selon l'une quelconque des revendications précédentes, **caractérisé en ce que** le premier élément d'accouplement (7) comprend une partie en forme de tige (7) autour de laquelle le troisième élément d'accouplement (19) peut être appliqué, où le troisième élément d'accouplement (19) comprend une partie en forme de fente (20) ayant une forme complémentaire à la partie en forme de tige (7) du premier élément d'accouplement (7), où le troisième élément d'accouplement (19) comprend également une partie en forme de manchon (21) qui se connecte à la partie en forme de fente (20), où la partie en forme de manchon (21) a une cavité interne ayant une forme complémentaire à la partie en forme de tige (7) du premier élément d'accouplement (7).

9. Ensemble de composants selon la revendication 8, **caractérisé en ce que** le premier élément d'accouplement (7) comprend une partie en forme de tige (7) autour de laquelle le troisième élément d'accouplement (19) peut être disposé, où la partie en forme de tige (7) est faite de plastique élastiquement déformable, où la partie en forme de tige (7) peut être insérée dans le troisième élément d'accouplement (19) dans un état déformé et peut être retirée, où la partie en forme de tige (7) dans un état non déformé ne peut pas être insérée dans le troisième élément d'accouplement (19) ou ne peut pas être retirée.

10. Ensemble de composants selon l'une quelconque des revendications précédentes, **caractérisé en ce que** le premier élément d'accouplement (7) et le deuxième élément d'accouplement (13) sont adaptés pour être couplés l'un à l'autre de manière réversible par une connexion par encliquetage afin d'interconnecter ainsi directement la sangle de fixation (2) et le corps de miroir (4).

11. Ensemble de composants selon l'une quelconque des revendications précédentes, **caractérisé en ce qu'**une barre géométrique enveloppante de la sangle de fixation (2) et une barre géométrique enveloppante de la bielle (3) et une barre géométrique enveloppante du corps de miroir (4) ont chacune une plus petite dimension qui est plus petite que 30 mm.

12. Ensemble de composants selon l'une quelconque des revendications précédentes, **caractérisé en ce que** l'ensemble de composants contient tous les composants (2, 3, 4) nécessaires pour fabriquer un miroir de bicyclette (1), où l'ensemble de composants est constitué d'une dite sangle de fixation (2), d'un dit corps de miroir (4) et d'une dite bielle (3), où ladite sangle de fixation (2) est faite en une seule pièce ou est constituée de composants interconnectés de manière inséparable et ledit corps de miroir (4) est fait en une seule pièce ou est constitué de composants interconnectés de manière inséparable.

13. Miroir de bicyclette (1) comprenant un ensemble de composants (2, 3, 4) selon l'une quelconque des revendications précédentes.
